# EUROPEAN PATENT APPLICATION

(11) **EP 4 679 272 A1**
(43) Date of publication of application: **14.01.2026**
(21) Application number: 25186290.0
(22) Date of filing: 30.06.2025
(51) Int. Cl.: G06F 9/54

(54) **SYSTEMS AND METHODS FOR COMMUNICATION BETWEEN COMPONENTS OF A PROCESSING DEVICE**

(30) Priority: 08.07.2024 US 202463668719 P; 07.10.2024 US 202418908420
(71) Applicant: Samsung Electronics Co., Ltd., Suwon-si, Gyeonggi-do 16677 (KR)
(72) Inventor: AMMARI, Ramzi, San Jose, CA, 95134 (US); CHOI, Changho, San Jose, CA, 95134 (US)
(74) Representative: Kuhnen & Wacker Patent- und Rechtsanwaltsbüro PartG mbB

(57) **Abstract**

Embodiments of the present disclosure are directed to a processing device comprising: a first component; a second component; and a processing circuit coupled to the first component and the second component. The processing circuit may be configured to: receive a first request from the first component for receiving a first notification; receive a second request from the second component for receiving a second notification; transmit the first notification to the first component based on detecting a criterion, wherein the first component is configured to generate a message based on the first notification; and transmit the second notification to the second component based on detecting the message, wherein the second component is configured to take an action based on the second notification.

## Description

### FIELD

One or more aspects of embodiments according to the present disclosure relate to computing devices, and more particularly to message communication between components included in the computing devices.

### BACKGROUND

Applications may perform computations on large amounts of data. As such types of computations increase, it may be desirable to employ efficient and cost-effective data processing solutions.

The above information disclosed in this Background section is only for enhancement of understanding of the background of the present disclosure, and therefore, it may contain information that does not form prior art.

### SUMMARY

Embodiments of the present disclosure are directed to a processing device comprising: a first component; a second component; and a processing circuit coupled to the first component and the second component. The processing circuit may be configured to: receive a first request from the first component for receiving a first notification; receive a second request from the second component for receiving a second notification; transmit the first notification to the first component based on detecting a criterion, wherein the first component is configured to generate a message based on the first notification; and transmit the second notification to the second component based on detecting the message, wherein the second component is configured to take an action based on the second notification.

In some embodiments, the first notification and the second notification are associated with a task, and the action is for executing at least a portion of the task.

In some embodiments, the task is generated by a computing device coupled to the processing circuit, wherein detecting the criterion includes detecting the task.

In some embodiments, based on the message, the processing circuit is configured to store data associated with the task in a queue of the second component, wherein the action includes retrieving the data from the queue.

In some embodiments, the processing device includes a third component, wherein the processing circuit is configured to: receive a third request from the third component for receiving the second notification; identify a second criterion associated with the third component; and transmit the second notification to the second component based on the second criterion.

In some embodiments, the second criterion includes a rate of signals received by the third component.

In some embodiments, the second criterion includes performance of the third component.

In some embodiments, the processing circuit is further configured to: add the second component to a list based on the second request; add the third component to the list based on the third request; modify a status of the third component in the list; and based on modifying the status of the third component in the list, select the second

In some embodiments, the processing circuit is configured to: associate a priority for the second notification; and transmit the second notification based on the associated priority.

In some embodiments, the first component includes a first type of processing element and the second component includes a second type of processing element.

Embodiments of the present disclosure are also directed to a method that includes: receiving, by a processing circuit, a first request from a first component for receiving a first notification; receiving, by the processing circuit, a second request from a second component for receiving a second notification; transmitting, by the processing circuit, the first notification to the first component based on detecting a criterion, wherein the first component is configured to generate a message based on the first notification; and transmitting, by the processing circuit, the second notification to the second component based on detecting the message, wherein the second component is configured to take an action based on the second notification.

These and other features, aspects and advantages of the embodiments of the present disclosure will be more fully understood when considered with respect to the following detailed description, appended claims, and accompanying drawings. Of course, the actual scope of the invention is defined by the appended claims.

### BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.
FIG. 1 depicts a block diagram of a computing system for event communication between device components according to one or more embodiments;
FIG. 2 depicts a block diagram of an event hub according to one or more embodiments;
FIG. 3 depicts an example messaging flow between components of a processing device according to one or more embodiments;
FIG. 4 depicts a flow diagram of a process for event communication and handling according to one or more embodiments;
FIG. 5 depicts another flow diagram of a process for event communication and handling according to one or more embodiments; and
FIG. 6 depicts another block diagram of a computing system for event communication between device components according to one or more embodiments.

### DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

Embodiments of the present disclosure are described below with reference to block diagrams and flow diagrams. Thus, it should be understood that each block of the block diagrams and flow diagrams may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments can produce specifically-configured machines performing the steps or operations specified in the block diagrams and flow diagrams. Accordingly, the block diagrams and flow diagrams support various combinations of embodiments for performing the specified instructions, operations, or steps.

In addition, a feature of embodiments of the present disclosure may be combined or combined with one or more other features, partially or entirely, and may be operated in various ways, and an embodiment may be implemented independently of one or more other embodiments, or in conjunction with the one or more other embodiments.

As the amount of data that is created and processed by a computing device grows, it may be desirable to employ efficient and cost-effective data processing solutions. For example, a computing device such as mobile device may need to process data efficiently with less power and less space. Such a computing device may use a system on a chip (SoC) architecture to help achieve the processing goals. An SoC provides components such as data processing units, memory, graphics processing units (GPUs), communication interfaces, and/or the like, in an integrated circuit (IC). Using an SoC for data processing may help simplify a circuit board design by eliminating separate and large system components. The simplified circuit board design may allow data to be processed with improved power and speed without negative impacts to system functionality.

The use of SoCs may extend to other processing tasks such as tasks in automotive systems, networking equipment, edge computing systems, medical devices, industrial applications, and the like. These processing tasks may be offloaded to the SoC by a host computing device as these tasks may also benefit from quick and efficient processing of tasks with less power. However, systems that employ SoCs may face challenges in effectively managing tasks and handling interrupts that can lead to delays, inefficient resource utilization, and/or slow performance.

In some cases, tasks to be processed by a component of the SoC may be queued in an event queue. The component processing the task may poll the event queue to determine whether a task has been assigned to the component. The continuous checking of the event queue may be inefficient and cause unnecessary use of the processor and power consumption.

In general terms, embodiments of the present disclosure are directed to systems and methods for subscription, notification, and congestion control of events for a processing device. The processing device may include an SoC, acceleration unit, computational storage device, and/or other computing device. In some embodiments, a component of the processing device subscribes to one or more events and receives event notifications when the one or more events are detected. The events may be associated with a task or work offloaded to the processing device by the host.

In some embodiments, the processing device includes an event hub engine configured to receive the subscription requests from the subscribing components. The event hub is further configured to detect the occurrence of events for which subscription requests have been received, and identify the subscribing components for transmitting event notifications or messages to the components. In some embodiments, details of the task are stored in an event queue of the subscribing component receiving the event notification. The event notification may prompt the subscribing component to check the event queue to retrieve details of the task and perform a corresponding action. In this manner a component need not continuously check the event queue for assigned tasks, and may instead check the queue when the event notification is received, helping reduce unnecessary processor use and power consumption.

In some embodiments, the event hub is configured for congestion detection, load balancing, event prioritization, reliability options, event logging, and/or event broadcast mechanisms. In regards to congestion detection, the event hub is configured to analyze event arrival rates, event processing speeds, and resource utilization (e.g., components processing the events) to identify congestion in the routing and/or handling of the events and/or event notifications. For example, the event hub may detect that one subscribing component of an event receives more of the events than another subscribing component of the event. The event hub may route the events to less congested components for better performance.

In some embodiments, the event hub is configured to add or remove subscribers for purposes of load balancing. In this regard, a subscribing component that is identified as being congested may be removed (e.g., temporarily removed) from a subscription list. The removal of the subscribing component may stop notifications of subscribed events to the removed component. The removed subscribing component may be added back to the subscription list when the component is no longer detected as being congested. In some embodiments, subscribers may dynamically be added to the subscription list at any time. For example, a subscription by a processing core may be dynamically added to the subscription list when load is high.

In some embodiments, the event hub may adjust priority of events (including notifications of the events) based on event type or urgency of the event, availability of components to handle the event, system load, and/or dependency on other operations. For example, event completion notifications may be delayed over other types of notifications such as, notifications indicating that a task has been submitted by the host (referred to as event doorbell notifications).

In some embodiments, the event hub is configured to provide reliability of transmission of events via one or more reliability mechanisms including fault tolerance, replication, and recovery mechanisms. In some embodiments, reliability of the transmission is obtained based transmitting an acknowledgement to the hub when an event is received by the subscriber. In this regard, the event hub may wait a threshold amount of time after the transmitting of a notification to receive the acknowledgment. If no acknowledgment is received, the event hub may transmit another notification to ensure receipt of the notification, making the communicating reliable.

In some embodiments, the event hub is duplicated in the device for providing fault tolerance in the functionality of the event hub.

In some embodiments, the event hub is configured to log information of events and traffic between components of the processing device 102. The logged information may be used, for example, for congestion detection, event prioritization, load balancing, and or the like.

In some embodiments, the event hub is configured to broadcast an event notification to multiple subscribers at a time. The broadcast of the event may allow multiple subscribers to execute (e.g., execute concurrently) different data segments of the event. In some embodiments, a broadcast entails transmitting a notification to the different components (e.g., at the same time), with different arguments. In some embodiments, a broadcast entails transmitting a notification to the different components (e.g., at the same time), with the various arguments for the various components, and the receiving components may determine the arguments to use based on their component ID.

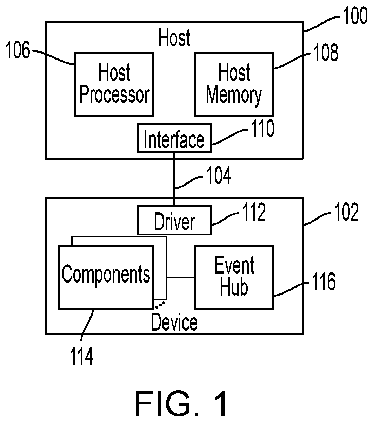

FIG. 1 depicts a block diagram of a computing system for event communication between device components according to one or more embodiments. The system includes a host computing device (referred to as the "host") 100 coupled to a one or more processing devices 102. The host 100 includes, without limitation, a host processor 106, host memory 108, and communication interface 110. The host processor 106 may include one or more central processing unit (CPU) cores (not shown) configured to execute computer program instructions stored in the host memory 108. The host memory 108 may include, for example, a dynamic random access memory (DRAM) storing the computer program instructions and/or other types of data.

In some embodiments, the host processor 106 (e.g., an application running on the processor) generates events for the processing device 102. The events may include, for example, signals, messages, data, or commands transmitted to the processing device 102 for offloading tasks to the processing device 102. Hereinafter the term "event" may be used to also include a notification or data of the event, and/or task associated with the event. Thus, the term event and notification may be used interchangeably herein. The events generated by the host 100 may be transmitted to the processing device 102 via the communication interface 110 and interface connection 104. Responses to the events may be generated by the processing device 102 and communicated to the host processor 106 over interface connection 104 and the communication interface 110.

In some embodiments, the interface connection 104 (e.g., the connector and the protocol thereof) includes a cache-coherent interconnect such as, for example, a Compute Express Link (CXL), although embodiments are not limited thereto. For example, the interface connection 104 (e.g., the connector and the protocol thereof) may also include a general-purpose interface such as, for example, Ethernet, Universal Serial Bus (USB), and/or the like. In some embodiments, the interface connection 104 may include (or may conform to) a Cache Coherent Interconnect for Accelerators (CCIX), dual in-line memory module (DIMM) interface, Small Computer System Interface (SCSI), Non Volatile Memory Express (NVMe), Peripheral Component Interconnect Express (PCIe), remote direct memory access (RDMA) over Ethernet, Serial Advanced Technology Attachment (SATA), Fiber Channel, Serial Attached SCSI (SAS), NVMe over Fabric (NVMe-oF), iWARP protocol, InfiniBand protocol, 5G wireless protocol, Wi-Fi protocol, Bluetooth protocol, and/or the like.

The communication interface 110 may include, for example, a PCIe interface configured to connect the host processor 106 and host memory 108 to the processing device 102. In some embodiments, a memory management unit and/or address translation table may be integrated into the communication interface 110 for translating virtual addresses used by the host processor 106, to physical addresses of the processing device 102.

The processing device 102 may include a device driver 112, one or more processing and/or storage components 114, and an event hub engine 116. In some embodiments, the processing device 102 is implemented as a system-on-a-chip (SoC), and the components 114 include one or more of a processor (e.g., CPU, microcontroller, microprocessor, field programmable gate array (FPGA), digital signal processor, and/or the like), memory (e.g., volatile or non-volatile memory), graphics processing unit (GPU), neural processing unit (NPU), tensor processing unit (TPU), artificial intelligence (AI) chip, communication interface (e.g., bus, network, and/or USB interface), other types of acceleration units, and/or the like. Embodiments of the present disclosure are not limited to SoCs and may extend to other types of computing devices with components that are integrated into a single chip, or distributed amongst multiple chips.

In some embodiments, the device driver 112 includes physical connections, memory, and/or an associated protocol (e.g., CXL) that allows the processing device 102 to exchange events with the host 100. In some embodiments, the device driver 112 includes a register memory that may be set (to a value of 1) or unset (to a value of 0). For example, the communication interface 110 of the host 100 may set the register memory to a value of 1 based on a signal or notification (e.g., an interrupt) from the host (e.g., doorbell signal) to signal availability of a task to be offloaded to the processing device 102.

In some embodiments, the event hub engine (referred to as the "event hub") 116 is configured to transmit and receive messages to and from the components 114 and device driver 112. The messages may include subscription messages from components for receiving notifications of events subscribed to via the subscription messages. The event hub 116 may be configured to monitor the events, messaging traffic, and performance of the components 114 for managing the subscription requests, scheduling the events, and managing notifications.

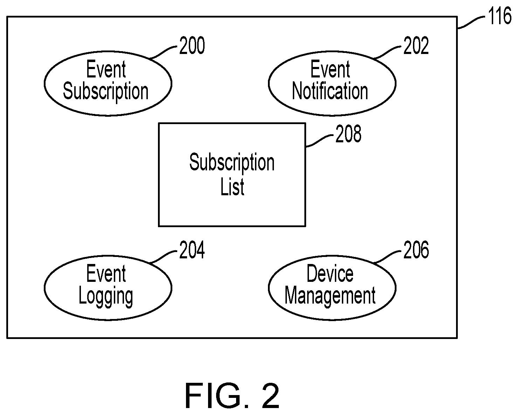

FIG. 2 depicts a block diagram of the event hub 116 according to one or more embodiments. The event hub 116 may include an event subscription engine 200, event notification engine 202, event logging engine 204, management engine 206, and a subscription list 208. The various engines 200-206 may be implemented via software, hardware, firmware, or a combination of software, hardware, and/or firmware. In some embodiments, the various engines 200-206 are implemented as separate functional units. However, a person of skill in the art will recognize that the functionality of the engines may be combined or integrated into a single engine or further subdivided into further sub-engines without departing from the scope of the inventive concept.

The event subscription engine 200 may be configured to receive subscription requests from the components 114 that are to receive notifications of events identified in the subscription requests. The events may include, for example, doorbell events, enqueue requests, completion messages, and/or the like.

A subscription request may identify the event and a corresponding event handler. The event may one of various predefined events that may be generated by the host 100 or the components 114. The event handler may be a method identifying one or more functions to be executed when the corresponding event is detected. The event handler may be called when the event is detected. The calling of the event may notify or signal the subscribing component 114 of the event.

In some embodiments, the event hub 116 stores details of the subscriptions in the subscription list 208. The subscription list may be stored in a memory of the event hub 116. The subscription list 208 may identify, for example, a list of subscribed events along with corresponding event handlers and component identifiers.

The event notification engine 202 may be configured to send an event notification or signal to one or more subscribing components 114 in response to receiving a notification of an event. The event notification engine 202 may transmit the notification or signal by calling one or more event handlers from the subscription list associated with the received event. The calling of the one or more event handlers may cause the execution of the method provided by the subscribing component for processing the event. The calling of the event handler may also be referred to as a sending of an event notification or signal.

In some embodiments reliability measures such as fault tolerance measures, replication measures, and recovery mechanisms may be used by the event notification engine 202 for reliably transmitting an event (e.g., a notification of the event) even if an error occurs in the initial transmission. For example, the event hub 116 may detect and log a transmission error and invoke one or more of the reliability measures to the transmission of the event. In some embodiments, the reliability measure entails waiting for an acknowledgment when an event is received by the subscribing component. The event hub 116 may be configured to replicate the event and store the event in a buffer until the acknowledgment is received. If the acknowledgment is not received in a threshold amount of time, the event may be recovered from the buffer and retransmitted to the subscribing component.

In some embodiments, the event logging engine 204 is configured to log details of events received by the processing device 102, tasks associated with the events, and messages transmitted between the components 114 of the processing device 102 for processing the events. The logged information may be used to perform congestion detection, load balancing, event prioritization, event delivery options, and/or the like. For example, logged details of events may include, without limitation, a type of event, timing of the event (e.g., transmission time, receipt time, completion time, etc.), identification of a creator of the event, identification of a recipient of the event, errors encountered regarding the event, and/or the like. The logged details of messages transmitted between the components 114 may include, without limitation, types of messages transmitted, transmission and receipt times of the messages, source and destination of the messages, and/or the like. For example, the event hub may compute a difference between completion and sending times to determine execution time. The event hub may detect congestion when the difference is above a threshold difference. The event hub may also compute a ratio of subscribers to an amount of notifications that have been sent. Congestion may be predicted when the ratio is below a threshold number, and may prompt the event hub to transmit a notification to add more subscribers to reduce completion times.

In some embodiments, the management engine 206 uses the log information to manage the subscription requests, prioritize the events, manage notifications, and/or the like. For example, the management engine 206 may update the subscription list 208 by adding and removing subscribing components 114 (subscribers) to and from the list. In some embodiments, a subscriber may be removed based on a monitored criterion. The criterion may relate to traffic and/or execution times (collectively referred to as congestion) in the transmitting and/or processing of events by the subscriber. For example, the criterion may include a rate of event notifications to the subscriber, an execution time by the subscriber, and/or the like. The management engine 206 may remove, filter, or pause (collectively referred to as "remove") a subscriber in response to the rate of event notifications received by the subscriber exceeding a threshold rate, in response to the processing speed of the subscriber being below a threshold speed, in response to utilization of the subscriber being above a threshold utilization, and/or the like. A subscriber may be removed from the subscription list by changing a status of the subscriber's event handler in the subscription list 208 from active to inactive/removed, or the like.

For example, if the management engine 206 determines based on the log information that a first component 114 subscribed to an event is congested (e.g., due to the increased rate of events received by the first component), the event hub 116 may route the event (including transmitting an associated event notification) to a second component that may also have subscribed to the event by removing the first component from the subscription list 208, but maintaining the second component in the subscription list. In some embodiments, the event may be split or divided amongst two or more subscribing components 114 if, for example, the components are equally congested.

In some embodiments, the management engine 206 uses the log information to prioritize certain events over others, ignore (e.g., temporarily ignore) events, add measures for satisfying quality of service (QoS), add measures for ensuring delivery of the events, and/or the like. In some embodiments, the event hub 116 assigns a priority to the events. The assigned priority may be used to determine timing (e.g., relative timing) of notifications related to the events. For example, an event that may not significantly affect QoS parameters may be assigned a lower priority than an event that may affect QoS parameters. A lower priority event may be ignored or transmitted after higher priority events.

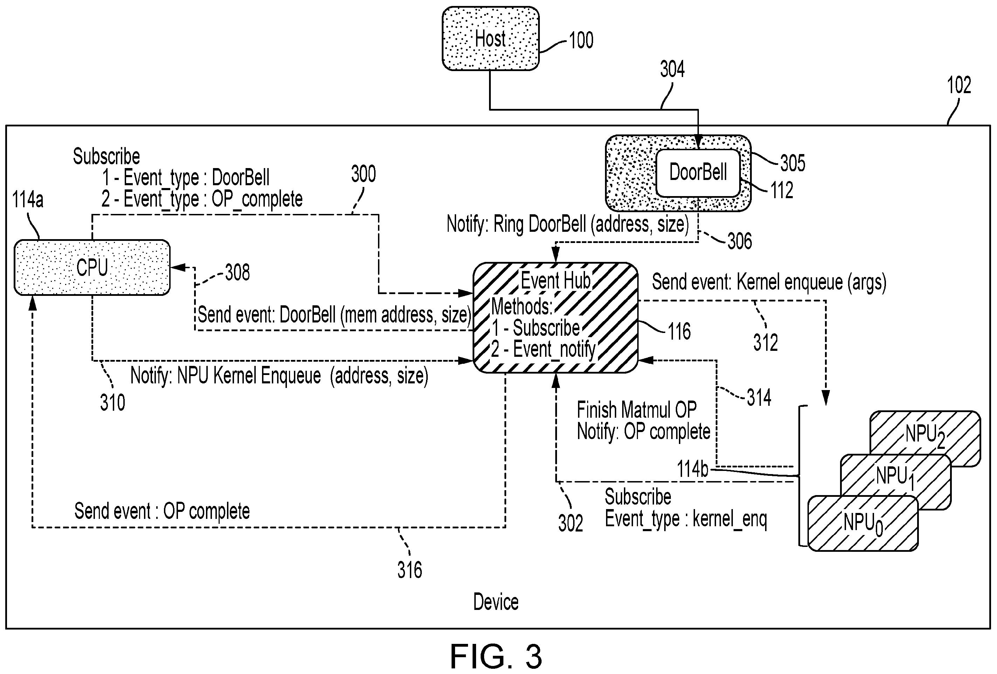

FIG. 3 depicts an example messaging flow between components 114 of the processing device 102 according to one or more embodiments. In the example depicted in FIG. 2 the components 114 may include a CPU component 114a and NPU components 114b that communicate with each over the event hub 116 for handling a task offloaded by the host 100. The communication may be over one or more data communication links using a communication protocol such as, for example, a bus-based communication, packet-switched networking protocol, wireless networking protocols, and/or the like.

In the example of FIG. 3, the CPU and NPU components 114a, 114b transmit subscription requests for events for handling the task. The subscription requests may identify the subscription event and the event handler. The event handler may take one or more processing steps upon the occurrence of the event. In the example of FIG. 3, the CPU component 114a transmits 300 a subscription request for a host doorbell event, and a subscription request for an operation completion event. The host doorbell event may be generated based on the host 100 transmitting a doorbell signal (e.g., an interrupt) indicating availability of a task to be offloaded for processing by the processing device 102. The operation completion event may be generated by the NPU 114b when a task or operation assigned to the NPU 114b has been completed.

The NPUs 114b may transmit 302 subscription requests for enqueue events. An enqueue event may be generated by the CPU 114a to assign an operation or task to the NPUs 114b.

The event hub 116 (e.g., event subscription engine 200) may receive the subscription requests and identify the subscribed events and associated event handlers. The subscribed events and associated event handlers may be added to a subscription list along information (e.g., an identifier) of the component 114 submitting the subscription request. In some embodiments, the NPU components 114b subscribe to different events, where each event is associated with a different event handler.

In one example, an application executed by the host 100 identifies work or a task to be offloaded (e.g., executed) by the processing device 102. The application may store details of the task in the host memory 108 (e.g., in a queue). The details may include a type of computation to be performed, and arguments for the computation. The host 100 may transmit 304 a doorbell signal in response to the storing of the task in the host memory 108. The doorbell signal from the host 100 may cause the setting of a doorbell register 305 in the device driver 112. The device driver 112 may transmit 306 a notification (ring doorbell notification) to the event hub 116 based on the host doorbell event. The notification may include, for example, a memory address of the host memory 108 where the task may be retrieved, and size of the data to be loaded for executing the task.

The event hub 116 (e.g., event notification engine 202) may receive the ring doorbell notification and identify the CPU component 114a as a subscriber to the doorbell event. The event hub 116 may identify and notify 308 the CPU component 114a of the ring doorbell event by calling the doorbell event handler specified by the CPU component. The calling of the doorbell event handler may cause the CPU component 114a to execute one or more functions for handling the doorbell event. The one or more functions may include loading, from the host memory 108, data associated with the task notified via the doorbell event, and generating an event for enqueueing the task in an event queue of one or more of the NPU components 114b. A notification of the enqueue event generated by the CPU component 114a may be transmitted 310 to the event hub 116.

The event hub 116 (e.g., the event notification engine 202) may receive the notification of the enqueue event and identify, from the subscription list, one or more subscribed NPU components 114b and associated event handlers. The event hub 116 may store data (e.g., arguments) associated with the task in an event queue of the identified NPU components 114b, and notify 312 the identified NPU components 114b of the enqueued task by calling the associated event handlers. The calling of the event handlers may cause execution of one or more functions of the event handlers for processing the task.

In some embodiments, the NPUs work on different parts of a problem or task. For example, if the task is the computation of a large matrix, each NPU processes a set of rows of the matrix. A broadcast mechanism may be used in this context to transmit an event to process a portion of the matrix. In some embodiments, a separate notification is transmitted to the NPUs with different arguments, but at approximately the same time. The transmitting of the notifications as a broadcast may allow the NPUs to finish their respective processes at approximately the same time. The arguments passed in the broadcast messages may be the rows to be processed by a particular NPU. For example, NPU0 is passed the argument to process rows 0-10, NPU 1 is passed the argument to process rows 10-20, and the like.

In some embodiments, the one or more of the subscribing NPU components are selected based on load balancing and congestion determinations of the subscribing NPU components 114b. A subset (e.g., less than all) of the subscribing NPU components 114b may be selected by the event hub 116 based on the load balancing and congestion determinations.

In some embodiments, the event handlers of the selected subscribing NPU components 114b are called for execution. The functions of an enqueue event handler may include retrieving data associated with the task from the event queue, performing an operation such as a matrix multiplication based on the retrieved data, and generating an event indicating completion of the operation. A notification of the completion event may be transmitted 314 to the event hub 116.

The event hub 116 may receive the completion notification and identify the CPU component 114a as a subscriber to the completion event. The event hub 116 may notify 316 the CPU component 114a of the completion event by calling the completion event handler specified by the CPU component 114a. The calling of the completion event handler may cause execution of one or more functions of the completion event handler. The one or more functions may include gathering the results of the operation and transmitting the results to the host 100.

In another example, the processing device may include a DRAM component 114 that subscribes to receive allocate memory events. The subscription request by the DRAM component 114 may include a DRAM NOTIFY event handler for handling the allocate memory events.

The event hub 116 receives an allocate memory event (e.g., from the host 100) and identifies the DRAM component 114 as having subscribed to the event. The event hub 116 calls the DRAM NOTIFY event handler specified by the DRAM component 114. The DRAM NOTIFY event handler is executed to take one or more actions associated with the event. For example, the DRAM NOTIFY event handler may call the DRAM component 114 with arguments (e.g., size and/or memory address) for performing an action such as allocating memory.

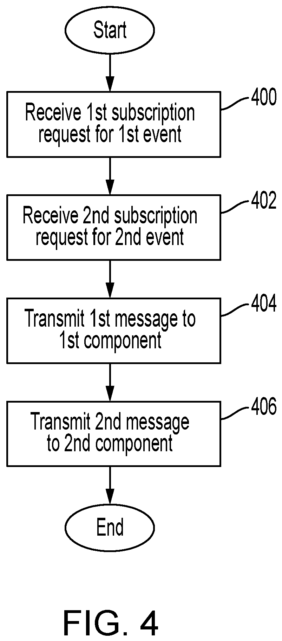

FIG. 4 depicts a flow diagram of a process for event communication and handling according to one or more embodiments. The process starts, and in act 400, the event hub 116 (e.g., the event subscription engine 200) receives a first request from a first component 114 for a first notification (e.g., a first event). The first request may be, for example, a subscription request. The first event may be an event that the first component 114 is configured to process upon receiving notification of the event. For example, the first event for the CPU component 114a of FIG. 3 may be a doorbell event or an operation completion event. The subscription request may identify an event handler (e.g., method) for processing the subscribed event.

In act 402, the event hub 116 (e.g., the event subscription engine 200) receives a second request from a second component 114 for a second notification (e.g., a second event). The second request may be, for example, a subscription request. The second event may be an event that the second component 114 is configured to process upon receiving notification of the event. For example, the second event for the NPU component 114b may be an enqueue event that indicates that there is a task available for processing by the NPU component. The subscription request may identify an event handler (e.g., method) for processing the enqueue event.

In act 404, the event hub 116 detects a criterion, such as the occurrence of the first event (e.g., the doorbell event), and transmits the first notification to the first component that is subscribed to receive the first notification. The first notification may be transmitted by calling the event handler specified by the first component for the first event. The calling of the event handler may cause execution of one or more functions. The execution of the one or more functions may generate a message or second event (e.g., the enqueue event) for queuing a task to be handled by other components of the processing device 102.

The event hub 116 detects the second event and, in act 406, transmits the second notification to the second component that is subscribed to the second event based on the second event. The second notification may be transmitted by calling the event handler specified by the second component for the second event. The calling of the event handler may cause execution of one or more functions for causing the second component to take an action. The action may include retrieving data associated with the enqueued task from the event queue, and execution at least a portion of the task. For example, if the task is a mathematical computation, the second component may perform the mathematical computation based on data stored in the event queue.

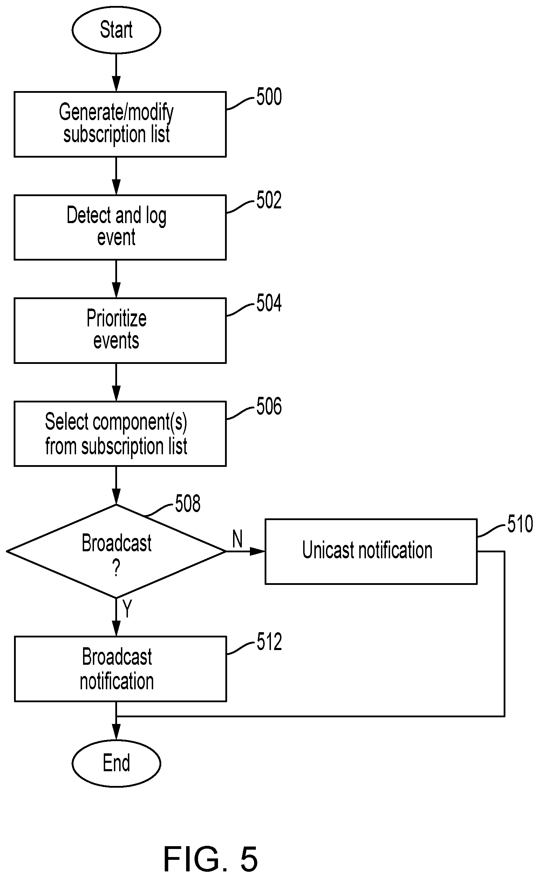

FIG. 5 depicts another flow diagram of a process for event communication and handling according to one or more embodiments. The process starts, and in act 500, the event hub 116 (e.g., event subscription engine 200) generates or modifies a subscription list 208 based on subscription requests.

In act 502, the event hub 116 (e.g., event logging engine 204) detects and logs events identified in the subscription list. The event logging engine 204 may log information about the events (e.g., the event itself or a notification of the event) such as, for example, an event type, event source, event destination, time of transmission of the event or notification, time of receipt (e.g., queueing) of the event or notification, processing time of the event, and/or the like. In some embodiments, the logged information is used by the event notification engine 202 and/or management engine 206 to transmit and/or manage the events or notifications of the events.

In act 504, the event hub 116 uses the logged information for prioritizing the events. In some embodiments, the events are prioritized based on urgency, resource availability, system load, and/or dependency of the event on other operations. For example, events for performing computations may be deemed to be more urgent (e.g. of higher priority) that other non-computation events. When there is a high system load with a high number of communications exchanged amongst the components 114, and/or availability of the components identified to receive the events is low, the higher priority events or notifications of such events may be transmitted prior to non-priority events.

In act 506, the components 114 to receive the events and/or notifications of the events is selected. Load balancing measures may be employed in selecting the components 114. For example, given two components 114 that have subscribed to receive notifications of an event, the notification may be transmitted to the component with lower congestion. Congestion may be determined based on a rate of messages received by the components 114. For example, a first NPU component 114b that receives more enqueue notification messages than a second NPU component may be deemed to be more congested than the second NPU component.

In some embodiments, congestion is determined based on performance of the components 114 in completing tasks. For example, a first component with an average completion time of tasks that is above a second component may be deemed to be more congested than the second component. In another example, the first component with an average utilization that is higher than the average utilization of the second component may be deemed to be more congested than the second component.

In some embodiments, components that exceed a threshold level of congestion may be removed from the subscription list 208. The removal of the component from the subscription list may prevent the component from receiving notifications of events. In some embodiments, a subscribing component may be removed from the subscription list 208 by changing a status of the subscriber's event handler in the subscription list 208 from active to inactive/removed, or the like.

In act 508, a determination is made as to whether a notification or signal to the selected components 114 should be transmitted via a broadcast transmission. If the answer is NO, the notification is transmitted by the event hub 116 to one or more selected components 114 via a unicast transmission.

If the answer is YES, the notification is transmitted by the event hub 116 to the one or more selected components 114 via a broadcast transmission.

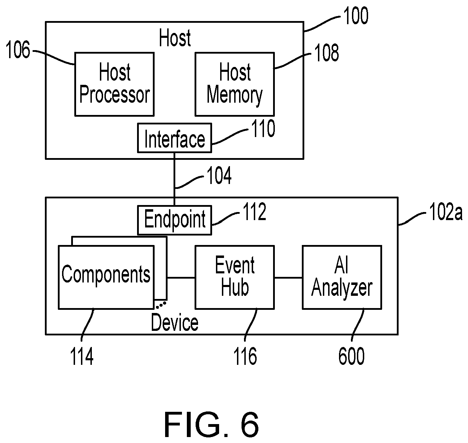

FIG. 6 depicts another block diagram of a computing system for event communication between device components according to one or more embodiments. The system of FIG. 6 is similar to the system of FIG. 1, except that the system of FIG. 6 includes an AI analyzer 600. The AI analyzer 600 may include one or more machine learning models for recommending components 114 to process the event for optimized performance by the components.

In some embodiments, optimal assignment of events to components is performed by the AI analyzer 600 using a deep neural network. The deep neural network may take as an input an event generated by the host 100 or components 114 of the processing device 102, along with attributes related to the condition of the processing device 102, and output a recommended component 114 to be assigned to the event. The attributes related to the condition of the processing device 102 may be obtained from data logged by the event logging engine 204. For example, the attributes may relate to events received by the processing device 102, tasks associated with the events, and messages transmitted between components 114 of the processing device 102.

In some embodiments, the neural network is divided into two or more layers, such as an input layer that receives the event data and the attributes related to the condition of the processing device 102, an output layer that outputs a recommended component 114 for processing the event, and one or more intermediate layers. The layers of the neural network may represent different groups of artificial neurons which may represent different functions performed on the input data to identify an optimal component for handling the event. The artificial neurons may apply different weights in the functions applied to the input data to identify the recommended component 114.

As a person of skill in the art should appreciate, embodiments of the present disclosure allow components of a processing device to be notified when a task has been assigned to the component, avoiding the need of the components to continuously check their queues for assigned tasks. In some embodiments, the use of the event hub 116 to coordinate the notifications and assign events based on monitoring conditions of the processing device 102 allow the events and associated tasks to be distributed and processed efficiently.

One or more embodiments of the present disclosure may be implemented in one or more processors. The term processor may refer to one or more processors and/or one or more processing cores. The one or more processors may be hosted in a single device or distributed over multiple devices (e.g. over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function is performed either by hardware configured, i.e., hard-wired, to perform that function, or by more general-purpose hardware, such as a CPU, configured to execute instructions stored in a non-transitory storage medium (e.g. memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the scope of the inventive concept.

The terminology used herein is for the purpose of describing particular embodiments only and is not intended to be limiting of the inventive concept. Also, unless explicitly stated, the embodiments described herein are not mutually exclusive. Aspects of the embodiments described herein may be combined in some implementations.

As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Although exemplary embodiments of systems and methods for event communication between device components have been specifically described and illustrated herein, many modifications and variations will be apparent to those skilled in the art. Accordingly, it is to be understood that systems and methods for event communication between components constructed according to principles of this disclosure may be embodied other than as specifically described herein. The disclosure is also defined in the following claims, and equivalents thereof.

The systems and methods for event communication between device components may contain one or more combination of features set forth in the below statements.

Statement 1. A processing device comprising: a first component; a second component; and a processing circuit coupled to the first component and the second component, wherein the processing circuit is configured to: receive a first request from the first component for receiving a first notification; receive a second request from the second component for receiving a second notification; transmit the first notification to the first component based on detecting a criterion, wherein the first component is configured to generate a message based on the first notification; and transmit the second notification to the second component based on detecting the message, wherein the second component is configured to take an action based on the second notification.

Statement 2. The device of Statement 1, wherein the first notification and the second notification are associated with a task, and the action is for executing at least a portion of the task.

Statement 3. The device of Statement 2, wherein the task is generated by a computing device coupled to the processing circuit, wherein detecting the criterion includes detecting the task.

Statement 4. The device of Statement 2, wherein, based on the message, the processing circuit is configured to store data associated with the task in a queue of the second component, wherein the action includes retrieving the data from the queue.

Statement 5. The device of Statement 1 further comprising a third component, wherein the processing circuit is configured to: receive a third request from the third component for receiving the second notification; identify a second criterion associated with the third component; and transmit the second notification to the second component based on the second criterion.

Statement 6. The device of Statement 5, wherein the second criterion includes a rate of signals received by the third component.

Statement 7. The device of Statement 5, wherein the second criterion includes performance of the third component.

Statement 8. The device of Statement 5, wherein the processing device is further configured to: add the second component to a list based on the second request; add the third component to the list based on the third request; modify a status of the third component in the list; and based on modifying the status of the third component in the list, select the second component to receive the second notification.

Statement 9. The device of Statement 1, wherein the processing circuit is configured to: associate a priority for the second notification; and transmit the second notification based on the associated priority.

Statement 10. The device of Statement 1, wherein the first component includes a first type of processing element and the second component includes a second type of processing element.

Statement 11. A method comprising: receiving, by a processing circuit, a first request from a first component for receiving a first notification; receiving, by the processing circuit, a second request from a second component for receiving a second notification; transmitting, by the processing circuit, the first notification to the first component based on detecting a criterion, wherein the first component is configured to generate a message based on the first notification; and transmitting, by the processing circuit, the second notification to the second component based on detecting the message, wherein the second component is configured to take an action based on the second notification.

Statement 12. The method of Statement 11, wherein the first notification and the second notification are associated with a task, and the action is for executing at least a portion of the task.

Statement 13. The method of Statement 12, wherein the task is generated by a computing device coupled to the processing circuit, wherein detecting the criterion includes detecting the task.

Statement 14. The method of Statement 12, wherein, based on the message, the processing circuit stores data associated with the task in a queue of the second component, wherein the action includes retrieving the data from the queue.

Statement 15. The method of Statement 11 further comprising: receiving, by the processing circuit, a third request from a third component for receiving the second notification; identifying, by the processing circuit, a second criterion associated with the third component; and transmitting, by the processing circuit, the second notification to the second component based on the second criterion.

Statement 16. The method of Statement 15, wherein the second criterion includes a rate of signals received by the third component.

Statement 17. The method of Statement 15, wherein the second criterion includes performance of the third component.

Statement 18. The method of Statement 15 further comprising: adding, by the processing circuit, the second component to a list based on the second request; adding, by the processing circuit, the third component to the list based on the third request; modifying, by the processing circuit, a status of the third component in the list; and based on modifying the status of the third component in the list, selecting, by the processing circuit, the second component to receive the second notification.

Statement 19. The method of Statement 11 further comprising: associating, by the processing circuit, a priority for the second notification; and transmitting, by the processing circuit, the second notification based on the associated priority.

Statement 20. The method of Statement 11, wherein the first component includes a first type of processing element and the second component includes a second type of processing element.

## Claims

1. A processing device comprising:
a first component;
a second component; and
a processing circuit coupled to the first component and the second component, wherein the processing circuit is configured to:
receive a first request from the first component for receiving a first notification;
receive a second request from the second component for receiving a second notification;
transmit the first notification to the first component based on detecting a first criterion, wherein the first component is configured to generate a message based on the first notification; and
transmit the second notification to the second component based on detecting the message,
wherein the second component is configured to take an action based on the second notification.

2. The processing device of claim 1, wherein the first notification and the second notification are associated with a task, and the action is for executing at least a portion of the task.

3. The processing device of claim 2, wherein the task is generated by a computing device coupled to the processing circuit, wherein detecting the first criterion includes detecting the task.

4. The processing device of claim 2 or 3, wherein, based on the message, the processing circuit is configured to store data associated with the task in a queue of the second component, wherein the action includes retrieving the data from the queue.

5. The processing device of any one of claims 1 to 4 further comprising a third component, wherein the processing circuit is configured to:
receive a third request from the third component for receiving the second notification;
identify a second criterion associated with the third component; and
transmit the second notification to the second component based on the second criterion.

6. The processing device of claim 5, wherein the second criterion includes a rate of signals received by the third component.

7. The processing device of claim 5 or 6, wherein the second criterion includes performance of the third component.

8. The processing device of any one of claims 5 to 7, wherein the processing circuit is further configured to:
add the second component to a list based on the second request;
add the third component to the list based on the third request;
modify a status of the third component in the list; and
based on modifying the status of the third component in the list, select the second component to receive the second notification.

9. The processing device of any one of claims 1 to 8, wherein the processing circuit is configured to:
associate a priority for the second notification; and
transmit the second notification based on the associated priority.

10. The processing device of any one of claims 1 to 9, wherein the first component includes a first type of processing element and the second component includes a second type of processing element.

11. A method comprising:
receiving, by a processing circuit, a first request from a first component for receiving a first notification;
receiving, by the processing circuit, a second request from a second component for receiving a second notification;
transmitting, by the processing circuit, the first notification to the first component based on detecting a criterion, wherein the first component is configured to generate a message based on the first notification; and
transmitting, by the processing circuit, the second notification to the second component based on detecting the message, wherein the second component is configured to take an action based on the second notification.

12. The method of claim 11, wherein the first notification and the second notification are associated with a task, and the action is for executing at least a portion of the task.

13. The method of claim 12, wherein the task is generated by a computing device coupled to the processing circuit, wherein detecting the criterion includes detecting the task.

14. The method of claim 12 or 13, wherein, based on the message, the processing circuit stores data associated with the task in a queue of the second component, wherein the action includes retrieving the data from the queue.

15. The method of any one of claims 11 to 14, further comprising:
receiving, by the processing circuit, a third request from a third component for receiving the second notification;
identifying, by the processing circuit, a second criterion associated with the third component; and
transmitting, by the processing circuit, the second notification to the second component based on the second criterion.
